Europäisches Patentamt

European Patent Office

Office européen des brevets

(11) Veröffentlichungsnummer: **0 249 836 B1**

# (12) EUROPÄISCHE PATENTSCHRIFT

(45) Veröffentlichungstag der Patentschrift: **18.12.91**

(51) Int. Cl.⁵: **H04Q 3/52,** H03K 5/02

(21) Anmeldenummer: **87108205.3**

(22) Anmeldetag: **05.06.87**

(54) **Breitbandsignal-Koppeleinrichtung.**

(30) Priorität: **19.06.86 DE 3620507**

(43) Veröffentlichungstag der Anmeldung:
**23.12.87 Patentblatt 87/52**

(45) Bekanntmachung des Hinweises auf die
Patenterteilung:
**18.12.91 Patentblatt 91/51**

(84) Benannte Vertragsstaaten:
**AT BE CH DE FR GB IT LI NL SE**

(56) Entgegenhaltungen:
**FR-A- 2 365 263**
**US-A- 3 938 049**

(73) Patentinhaber: **SIEMENS AKTIENGESELL-
SCHAFT**
**Wittelsbacherplatz 2**
**W-8000 München 2(DE)**

(72) Erfinder: **König, Wilhelm**
**Theresienstrasse 48**
**W-8000 München 2(DE)**
Erfinder: **Lang, Thomas**
**Schlesierstrasse 3**
**W-8028 Taufkirchen(DE)**
Erfinder: **Trumpp, Gerhard**
**Mitterlängstrasse 7**
**W-8039 Puchheim(DE)**

## Beschreibung

Neuere Entwicklungen der Fernmeldetechnik führen zu diensteintegrierenden Nachrichtenübertragungs- u. -vermittlungssystemen für Schmalband- und Breitband-Kommunikationsdienste, die als Übertragungsmedium im Bereich der Teilnehmeranschlußleitungen Lichtwellenleiter vorsehen, über die sowohl die Schmalbandkommunikationsdienste, wie insbesondere 64-kbit/s-Digital-Telefonie, als auch Breitbandkommunikationsdienste, wie insbesondere 140-Mbit/s-Bildtelefonie, geführt werden, wobei aber in den Vermittlungsstellen (vorzugsweise gemeinsame Steuereinrichtungen aufweisende) Schmalbandsignal-Koppeleinrichtungen und Breitbandsignal-Koppeleinrichtungen nebeneinander vorgesehen sind (DE-PS 24 21 002).

Im Zusammenhang mit einer Breitbandsignal-Zeitmultiplex-Koppeleinrichtung, deren Koppelpunkte im Zeitmultiplex jeweils für eine Mehrzahl von Verbindungen genutzt werden, ist es bekannt, jeweils zwei Leitungen mit Hilfe eines Gatterelements zu verbinden, das von einer als bistabiles D-Kippglied gebildeten koppelpunktindividuellen Speicherzelle ein- und ausgeschaltet wird, wobei diese koppelpunktindividuelle Speicherzelle, deren Clock-Eingang ein entsprechendes Taktsignal zugeführt wird, in nur einer Koordinatenrichtung, und zwar an ihrem D-Eingang, angesteuert wird (Pfannschmidt: "Arbeitsgeschwindigkeitsgrenzen von Koppelnetzwerken für Breitband-Digitalsignale", Diss., Braunschweig 1978, Bild 6.7, ferner Bild 6.4). In Anbetracht eines bei einer Bitrate von 140 Mbit/s erreichbaren Zeitmultiplexfaktors von etwa 4 bis 8 und der dabei erforderlichen aufwendigen Schaltungstechnologie werden derzeit allerdings zur Vermittlung von Breitbandsignalen reine Raumkoppeleinrichtungen bevorzugt, in denen die über die einzelnen Koppelpunkte durchgeschalteten Verbindungen allein räumlich voneinander getrennt sind.

Eine reine Breitbandsignal-Raumkoppelanordnung kann als mit Eingangsverstärkern und Ausgangsverstärkern versehene Koppelpunktmatrix in C-MOS-Technik ausgebildet sein, in deren Koppelpunkten die Koppelelemente jeweils von einer decodergesteuerten, koppelpunktindividuellen Halte-Speicherzelle gesteuert werden, wobei die Koppelelemente jeweils als C-MOS-Transfergate (C-MOS-Transmissionsgate) ausgebildet sind (ISS'84 Conference Papers 23C1, Fig.9); die koppelpunktindividuellen Halte-Speicherzellen eines reinen Raumkoppelvielfachs können von einem Zeilendecoder und von einem Spaltendecoder her jeweils über eine zeilen-bzw. spaltenindividuelle Ansteuerleitung in zwei Koordinaten angesteuert werden (Pfannschmidt, a.a.O., Bild 6.4). In einer Koppelmatrix vorgesehene Ausgangsverstärker können auch in Abhängigkeit von der Aktivierung (mindestens) eines Koppelpunkts der zugehörigen Matrixleitung aktiviert sein (FR-A-2 365 263, FIG.5).

Es ist weiter (aus Electronics, Dec.15, 1983, p.88/89) in allgemeiner Form bekannt, in einer Breitbandsignal-Koppelpunktmatrix digitale Koppelpunkte in Form von Tristate-Invertern vorzusehen, deren konkrete Realisierung dabei indessen offenbleibt, jedenfalls aber eine Mehrzahl von Transistoren erfordert.

Einen besonders geringen Transistoraufwand bei der konkreten Realisierung der einzelnen Koppelpunkte weist eine (in DE-P 36 04 605.1 (VPA 86P1060) beschriebene) Breitbandsignal-Raumkoppeleinrichtung mit einer Koppelpunktmatrix in FET-Technik, deren Koppelelemente jeweils von einer decodergesteuerten, koppelpunktindividuellen Speicherzelle gesteuert werden, auf, bei der die Koppelelemente jeweils durch einen einzigen, von der Speicherzelle an seiner Gate-Elektrode mit einem den oberen (Grenz-)Wert eines durchzuschaltenden Signals um mehr als die Transistor-Pinch-Off-Spannung überschreitenden Durchschaltepotential bzw. mit einem den durch Erhöhung des unteren (Grenz-)Werts eines durchzuschaltenden Signals um die Transistor-Pinch-Off-Spannung sich ergebenden Pegel unterschreitenden Sperrpotential beaufschlagten n-Kanal-Transistor gebildet sind.

Man kann so in einer Koppelpunktmatrix vorgesehene, in einfacher Weise jeweils durch eine koppelpunktindividuelle Halte-Speicherzelle gesteuerte Koppelelemente mit minimalem Transistoraufwand, ohne Inverter und ohne einen in einem C-MOS-Transfergate vorzusehenden, wegen seines höheren spezifischen Widerstands eine grössere Fläche erfordernden p-Kanal-Transistor und damit - was bei einer Integration von besonderer Bedeutung ist - mit entsprechend geringem Platzbedarf und mit entsprechend geringen Schaltungskapazitäten realisieren.

Eine zusätzliche Reduzierung der Schaltungsgröße und damit des Platzbedarfs eines solchen Koppelpunktes ergibt sich mit einer durch zwei Ansteuerdecoder (Zeilendecoder, Spaltendecoder) in zwei Koordinaten angesteuerten, koppelpunktindividuellen Speicherzelle, die durch einen n-Kanal-Transistor und zwei kreuzgekoppelte Inverterschaltungen gebildet ist, deren eine eingangsseitig mit dem zugehörigen Decoderausgang des einen Ansteuerdecoders über den n-Kanal-Transistor verbunden ist, der seinerseits an seiner Steuerelektrode mit dem Ausgangssignal des zugehörigen Decoderausgangs des anderen Ansteuerdecoders beaufschlagt ist, und deren andere ausgangsseitig zum Steuereingang des zugehörigen Koppelelements führt.

Über eine solche vorgeschlagene Breitbandsignal-Raumkoppeleinrichtung mit einer beispielsweise 64 Eingänge und 32 Ausgänge aufweisenden Koppelpunktmatrix in FET-Technik lassen sich beliebig asynchrone Signale mit Bitraten bis in der Größenordnung von 170 Mbit/s und damit insbesondere auch ein einen sog. H4-Kanal ausfüllendes (etwa 140-Mbit/s-)Signal jeweils zwischen einem Eingang und einem Ausgang (oder - bei Verteildiensten - auch mehreren Ausgängen) durchschalten. Es erhebt sich indessen der Forderung, nicht nur jeweils einen ganzen H4-Kanal vermitteln zu können, sondern auch Unterkanäle, beispielsweise sog. H3-Kanäle für (etwa 34-Mbit/s-Signale. Eine solche Unterkanalvermittlung läßt sich prinzipiell mit Hilfe von den jeweiligen (H4-)Kanal in seine (H3-)Unterkanäle zerlegenden Demultiplexern vor der Koppeleinrichtung und die Unterkanäle wieder zu einem Kanal zusammenfassenden Multiplexern hinter der Koppeleinrichtung erreichen, wobei die Koppeleinrichtung selbst die einzelnen Unterkanäle jeweils für sich vermittelt; dies setzt allerdings eine entsprechende Vervielfachung der Eingänge und Ausgänge der Koppelpunktmatrix voraus, die statt im Beispiel zunächst 64 x 32 Koppelpunkten dann beispielsweise 256 x 128 Koppelpunkte aufweisen muß. Dabei bringt die Forderung nach voller Verteildienstfähigkeit der Koppelpunktmatrix das Problem mit sich, daß jeder der (im Beispiel 256) Eingänge einer solchen Koppelpunktmatrix durch alle (im Beispiel 128) Ausgänge der Koppelpunktmatrix gleichzeitig belastbar sein muß. Dies würde an sich 256 übermäßig große Eingangstreiberschaltungen erfordern, deren Querströme und Verlustleistung indessen die Machbarkeit eines solchen Koppelpunktmatrix-Bausteins erheblich erschweren würde.

Die Erfindung stellt sich demgegenüber die Aufgabe, eine Breitbandsignal-Koppeleinrichtung anzugeben, die den im vorstehenden umrissenen Anforderungen ohne solche Erschwernisse gerecht zu werden vermag.

Die Erfindung betrifft eine Breitbandsignal-Koppeleinrichtung mit einer Koppelpunktmatrix in FET-Technik, an deren Eingängen jeweils eine Eingangstreiberschaltung vorgesehen sein kann und deren Ausgänge jeweils mit einer Ausgangsverstärkerschaltung versehen sind; diese Breitbandsignal-Koppeleinrichtung ist erfindungsgemäß dadurch gekennzeichnet, daß die Koppelpunkte mit im Durchschaltezustand jeweils einen gegenüber dem an einem Matrixeingang wirksamen Innenwiderstand großen Durchlass- bzw. Innenwiderstand aufweisenden Koppelelementen gebildet sind und daß die Ausgangsverstärkerschaltungen jeweils eine in die betreffende Ausgangsleitung eingefügte Kettenschaltung eines Komparators und eines Speicherglieds und eine den von den zugehörigen Koppelelementen zu dem einen Komparatoreingang führenden Ausgangsleitungsabschnitt mit dem anderen Komparatoreingang verbindende Sample-and-Hold-Schaltung mit einem Haltespeicher und einem Schalter aufweisen, dessen Steuerelektrode mit einem eine Bit-Durchschaltezeitspanne in eine Vorphase und die eigentliche Durchschaltephase unterteilenden Koppelfeld-Durchschalte-Takt beaufschlagt ist und über den in jeder Vorphase der Haltespeicher zumindest angenähert auf das auf dem genannten Ausgangsleitungsabschnitt momentan herrschende Potential umgeladen wird, das dann in der nachfolgenden Durchschaltephase an dem genannten weiteren Komparatoreingang aufrechterhalten bleibt.

Es sei an dieser Stelle bemerkt, daß es (aus US-A-3 938 049, FIG.11) zur Amplitudenbasis-Korrektur in einer opto-elektrischen Abtasteinrichtung an sich bekannt ist, das bei der Abtastung gewonnene Signal direkt dem einen Eingang und über einen während einer Dunkelperiode geschlossenen und kurz vor deren Ende wieder geöffneten Schalter mit nachfolgendem Haltekondensator dem anderen Eingang eines Differenzverstärkers zuzuführen.
Probleme einer besonders zweckmäßigen Ausbildung einer Breitbandsignal-Koppeleinrichtung werden dabei nicht berührt; hierzu zeigt aber die Erfindung einen Weg.

Die Erfindung bringt den Vorteil mit sich, daß schon ein - noch keine übermäßigen Anforderungen an die Eingangstreiberschaltungen und ihre Querströme und Verlustleistungen stellender - kleiner Signalhub und eine dadurch bewirkte kleine Umladung der jeweils zum Komparatoreingang führenden Ausgangsleitungsabschnitte ausreicht, um am jeweiligen Ausgang des - in weiterer Ausgestaltung der Erfindung hysteresebehafteten - Komparators und damit auf dem von dort weiterführenden Ausgangsleitungsabschnitt einen eindeutigen Übergang des Digitalsignals vom jeweils einen in den jeweils anderen Signalzustand zu bewirken.

Das Speicherglied kann in weiterer Ausgestaltung der Erfindung durch ein an seinem Takteingang mit dem Koppelfeld-Durchschalte-Takt beaufschlagtes D-Kippglied gebildet sein.

Weitere Besonderheiten der Erfindung werden aus der nachfolgenden näheren Erläuterung der Erfindung anhand der Zeichnungen ersichtlich. Dabei zeigen
FIG 1 und FIG 2
das Schema einer Breitband-Koppeleinrichtung mit ihren Koppelpunkten und
FIG 3
Einzelheiten ihrer schaltungstechnischen Realisierung gemäß der Erfindung.

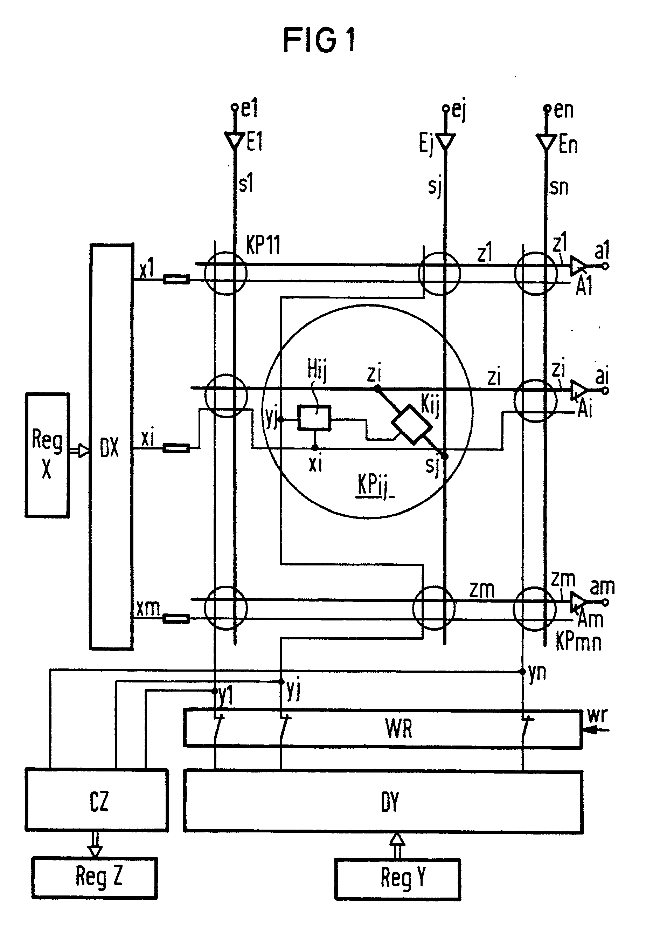

In der Zeichnung FIG 1 ist schematisch in zum Verständnis der Erfindung erforderlichem Umfange eine Breitbandsignal-Koppeleinrichtung skizziert, an deren zu Spaltenleitungen sl...sj...sn einer Koppelpunktmatrix führenden Eingängen el...ej...en Eingangstreiberschaltungen El..Ej...En vorgesehen sind und deren von Zeilenleitungen zl...zi...zm der Koppelpunktmatrix erreichte Ausgänge al...ai...am mit Ausgangsverstärkerschaltungen Al...Ai...Am versehen sind. Die Koppelpunktmatrix weist Koppelpunkte KPll...KPij...KPmn auf, deren Koppelelemente, wie dies beim Koppelpunkt KPij für dessen Koppelelement Kij weiter ins Einzelne gehend angedeutet ist, jeweils von einer koppelpunktindividuellen Halte-Speicherzelle Hij (beik Koppelpunkt KPij) gesteuert werden, deren Ausgang zum Steuereingang des jeweiligen Koppelelements (Kij beim Koppelpunkt KPij) führt.

Die Halte-Speicherzellen ... Hij... werden gemäß FIG 1 durch zwei Ansteuerdecoder, nämlich einen Zeilendecoder DX und einen Spaltendecoder DY, über entsprechende Ansteuerleitungen xl...xi...xm; yl...yj...yn in zwei Koordinaten angesteuert.

Dazu mögen, wie dies aus FIG 1 ersichtlich ist, die beiden Ansteuerdecoder DX, CY von Eingangsregistern Reg X, Reg Y jeweils mit einer einer Matrixreihe (Zeile bzw.Spalte) von Koppelpunkten gemeinsamen Koppelpunktzeilen- bzw. Koppelpunktspalten-Adresse beaufschlagbar sein, auf die hin sie jeweils an der der jeweiligen Koppelpunktreihen-Adresse entsprechenden Ansteuerleitung jeweils ein "1"-Ansteuersignal abgeben. Das Zusammentreffen eines Zeilenansteuersignals "1" und eines Spaltenansteuersignals "1" am Kreuzungspunkt der betreffenden Matrixzeile mit der betreffenden Matrixspalte beim Aufbau einer entsprechenden Verbindung bewirkt dann eine Aktivierung der dort befindlichen Halte-Speicherzelle, beispielsweise der Halte-Speicherzelle Hij, mit der Folge, daß das von der betreffenden Halte-Speicherzelle (Hij) gesteuerte Koppelelemente, im Beispiel das Koppelelement Kij, leitend wird.

Damit das im Beispiel betrachtete Koppelelement Kij beim Abbau der betreffenden Verbindung wieder gesperrt wird, wird wiederum der Ansteuerdecoder DX vom Eingangsregister Reg X mit der betreffenden Zeilenadresse beaufschlagt, so daß der Zeilendecoder DX wiederum auf seiner Ausgangsleitung xi ein Zeilenansteuersignal "1" abgibt, und zugleich wird der Spaltendecoder DY von seinem Eingangsregister Reg Y her beispielsweise mit einer Leeradresse oder mit der Adresse einer Spalte von unbeschalteten Koppelpunkten beaufschlagt, so daß er auf seiner Ausgangsleitung yj ein Spaltenansteuersignal "0" abgibt; das Zusammentreffen von Zeilenansteuersignal "1" und Spaltenansteuersignal "0" bewirkt dann die Rücksetzung der Halte-Speicherzelle Hij mit der Folge, daß das von ihr gesteuerte Koppelelement Kij gesperrt wird.

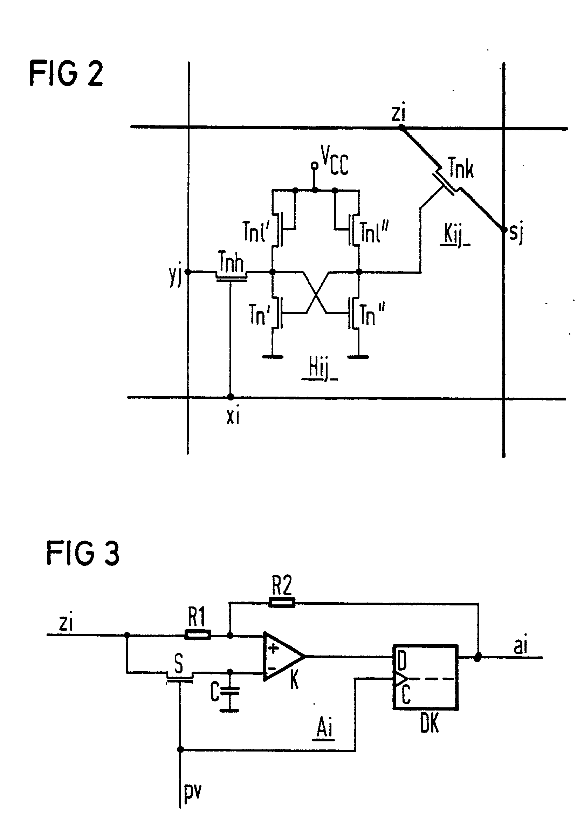

Wie dies aus FIG 2 ersichtlich wird, kann die durch die beiden Ansteuerdecoder (Zeilendecoder DX und Spaltendecoder DY in FIG 1) in zwei Koordinaten angesteuerte Speicherzelle Hij durch einen n-Kanal-Transistor Tnh und zwei kreuzgekoppelte Inverterschaltungen Tn', Tnl'; Tn", Tnl" gebildet sein, deren eine (Tn',Tnl') eingangsseitig mit dem zugehörigen Decoderausgang yj des einen Ansteuerdecoders (DY in FIG 1) über den n-Kanal-Transistor Tnh verbunden ist, der seinerseits an seiner Steuerelektrode mit dem Ausgangssignal des zugehörigen Decoderausgangs xi des anderen Ansteuerdecoders (DX in FIG 1) beaufschlagt ist, während die andere der beiden kreuzgekoppelten Inverterschaltungen ausgangsseitig zum Steuereingang des zugehörigen Koppelelements Kij führt.

Das Koppelelement Kij kann beispielsweise mit einem Tristate-Treiber oder, wie dies auch FIG 2 zeigt, durch einen einzigen n-Kanal-Transistor Tnk gebildet sein, der an seiner Gate-Elektrode mit einem den oberen (Grenz-)Wert eines zwischen Spaltenleitung (Eingangsleitung) sj und Zeilenleitung (Ausgangsleitung) zi durchzuschaltenden Signals um mehr als die Transistor-Pinch-Off-Spannung überschreitenden Durchschaltepotential ("H"-Pegel) bzw. mit einem den durch Erhöhung des unteren (Grenz-)Wert eines zwischen Spaltenleitung (Eingangsleitung) sj und Zeilenleitung (Ausgangsleitung) zi durchzuschaltenden Signals um die Transistor-Pinch-Off-Spannung gegebenen Pegel unterschreitenden Sperrpotential ("L"-Pegel) beaufschlagt wird. Solche Realisierungen von Haltespeicherzelle Hij und Koppelelement Kij werden bereits an anderer Stelle (DE-P 36 04 605.1) beschrieben, so daß weitere Erläuterungen hier nicht erforderlich sind. Wesentlich ist hier lediglich, daß der Durchlaßwiderstand eines solchen Koppelelements groß gegenüber dem an der Matrix-Spaltenleitung sj wirsamen Innenwiderstand der dort vorgesehenen Eingangstreiberschaltung Ej (in FIG 1) ist, was durch eine entsprechende Auslegung der Transistorgeometrie leicht zu verwirklichen ist.

In FIG 1 ist noch angedeutet, daß den Ausgängen des Spaltendecoders DY Schreibschalter WR nachgeschaltet sind, die nur bei Auftreten eines Schreibbefehls auf einer Freigabeleitung wr geschlossen sein mögen und dann das ggf. an einem Decoderausgang auftretende "1"-Ansteuersignal ("L") und den an die übrigen Decoderausgängen auftretenden " 0"-Ansteuersignale ("H") niederohmig auf die einzelnen Spaltenansteuerleitungen yl,...,yj,...,yn durchschalten, so daß in der zuvor erläuterten Weise die jeweils angesteuerten Koppelelemente in den Durchschalte- bzw. Sperrzustand gelangen.

Soll dagegen der Koppelzustand einer Zeile von Koppelpunkten der Koppelpunktmatrix lediglich ausgelesen werden, wozu die betreffende Zeilenansteuerleitung, beispielsweise die Leitung xi, wiederum, wie bei einem Verbindungsaufbau oder Verbindungsabbau, mit einem "1"-Ansteuersignal ("H") beaufschlagt wird, so bleiben die Schreibschalter WR infolge Ausbleibens eines auf der Freigabeleitung wr auftretenden Schreibbefehls geöffnet mit der Folge, daß die Spaltenansteuerleitungen yl,...,yj,..,yn vom Spaltendecoder DY her jetzt kein Steuerpotential erhalten. Über die erwähnten, durch das Zeilenansteuersignal "H" von ihrer Gate-Elektrode her dennoch entriegelten n-Kanal-Transistoren Tnh (in FIG 2) der Halte-Speicherzellen Hij der betreffenden Koppelpunktzeile ...Kpij... kann dann ein in der Halte-Speicherzelle Hij gerade herrschender Signalzustand auf die jeweilige Spaltenansteuerleitung (yj in FIG 2) durchgeschaltet werden, wobei bei fehlerfreiem Betrieb auf nicht mehr als einer Spaltenansteuerleitung yl,.. ,yj,...,yn (in FIG 1) ein "L"-Potential auftreten darf. Wie dies auch in FIG 1 angedeutet ist, kann die Adresse dieser Spaltenansteuerleitung und damit die Adresse des betreffenden Koppelpunktes mit Hilfe eines Coders CZ gewonnen und von diesem auf ein folgendes Register Reg Z weitergeben werden.

Die Zwischen einer Zeilenleitung $z_i$ (in FIG 1 und FIG 2) und dem nachfolgenden Ausgang $a_i$ (in FIG 1) der Koppelpunktmatrix vorgesehene Ausgangsverstärkerschaltung Ai (in FIG 1) weist nun, wie dies auch FIG 3 verdeutlicht, eine zwischen die betreffenden Ausgangsleitungsabschnitte $z_i$ und $a_i$ eingefügte Kettenschaltung - gemäß FIG 3 mit einem Differenzverstärker realisierten - Komparators K und eines - im Ausführungsbeispiel gemäß FIG 3 mit einem flankengesteuerten D-Kippglied DK gebildeten - Speichergliedes sowie eine Sample-and-Hold-Schaltung mit einem in FIG 3 durch einen Kondensator gebildeten Haltespeicher C und einem gemäß FIG 3 durch einen MOS-Transistor S gebildeten Schalter auf, die den von den zugehörigen Koppelelementen ...Kij... (In FIG 1 und FIG 2) zu dem einen Komparatoreingang (+) führenden Ausgangsleitungsabschnitt $z_i$ mit dem anderen Komparatoreingang (-) verbindet; der Durchlasswiderstand des Transistor-Schalters kann dabei klein gegenüber dem Durchlasswiderstand eines Koppelements Kij (in FIG 1 und FIG 2) sein. Die Steuerelektrode des Schalter-Transistors S liegt zusammen mit dem Takteingang C des D-Kippgliedes DK an einer Taktleitung pv, die mit einem eine Bit-Durchschaltezeitspanne in eine Vorphase und eine Hauptphase unterteilenden Takt beaufschlagt sein möge.

Während der Vorphase ist der Schalter-Transistor S leitend, sodaß der Haltespeicher C auf das auf der Matrix-Zeilenleitung $z_i$ momentan herrschende Potential geladen wird. Die Eingangstreiberschaltung Ej (in FIG 1) kann in dieser Vorphase in einen Ruhezustand (Tri-State) geschaltet sein oder auch schon von ihrem Ausgang her das dem durchzuschaltenden Bit entsprechende Potential

aufbauen.

In der nachfolgenden Hauptphase, in welcher der Schalter-Transistor S gesperrt ist, bleibt das im Haltespeicher C festgehaltene Potential an dem genannten weiteren Komparatoreingang (-) aufrechterhalten, während gleichzeitig von der zugehörigen Spaltenleitung sj (in FIG 1 und FIG 2) her über das Koppelelement Kij (in FIG 1 und FIG 2) die zum genannten einen Eingang (+) des Komparators K führende Matrix-Zeilenleitung $z_i$ auf das dem damit durchgeschalteten Bit entsprechende Potential (weiter-)geladen wird. Dabei genügt schon eine kleine Umladung der Matrix-Zeilenleitung $z_i$, um ggf. am Komparatorausgang (Eingang D des D-Kippgliedes DK) einen eindeutigen Übergang des Digitalsignals von dem jeweils einen in den jeweils anderen Signalzustand zu bewirken, der dann am Ende der Durchschaltephase mit der Taktflanke vom D-Kippglied DK übernommen wird und damit am Ausgang $a_i$ der Koppeleinrichtung gegeben ist; das Koppelelement Kij (in FIG 1 und FIG 2) kann daher, wie schon gesagt wurde, auf einen relativ hohen Durchlasswiderstand hin ausgelegt sein.

Wie oben ebenfalls schon gesagt wurde, ist der Komparator K zweckmässigerweise hysteresebehaftet, was im Ausführungsbeispiel gemäß FIG 3 mit Hilfe einer zwei Widerstände R1, R2 aufweisenden Mitkopplungsschaltung erreicht wird. Mit einer solchen Hysterese wird vom Komparator K eine einwandfreie Digitalsignaldurchschaltung selbst dann gewährleistet, wenn im Digitalsignal sehr lange Folgen des gleichen Bits auftreten, so daß mit der Zeit das Potential auf dem Ausgangsleitungsabschnitt $z_i$ den diesem Bit entsprechenden vollen Signalpegel erreicht und dann zwischen den beiden Komparatoreingängen keine Potentialdifferenz mehr verbleibt, wie sie bis dahin auch bei einer Aufeinanderfolge gleicher Signalbits vorhanden ist.

## Patentansprüche

1. Breitbandsignal-Koppeleinrichtung mit einer Koppelpunktmatrix in FET-Technik, an deren Eingängen (ej-sj) jeweils eine Eingangstreiberschaltung (Ej) vorgesehen sein kann und deren Ausgänge (zi-ai) jeweils mit einer Ausgangsverstärkerschaltung (Ai) versehen sind,
**dadurch gekennzeichnet,**
daß die Koppelpunkte (KPij) mit im Durchschaltezustand jeweils einen gegenüber dem an einem Matrixeingang (sj) wirksamen Innenwiderstand großen Durchlass- bzw. Innenwiderstand aufweisenden Koppelelementen (Kij) gebildet sind und daß die Ausgangsverstärkerschaltungen (Ai)
jeweils eine in die betreffende Ausgangsleitung (zi-ai) eingefügte Kettenschaltung eines Komparators (K) und eines Speichergliedes (DK)

und eine den von den zugehörigen Koppelelementen (..Kij..) zu dem einen Komparatoreingang (+) führenden Ausgangsleitungsabschnitt (zi) mit dem anderen Komparatoreingang (-) verbindende Sample-and-Hold-Schaltung mit einem Haltespeicher (C) und einem Schalter (S)
aufweisen,
dessen Steuerelektrode mit einem eine Bit-Durchschaltezeitspanne in eine Vorphase (pv) und die eigentliche Durchschaltephase (ph) unterteilenden Koppelfeld-Durchschalte-Takt beaufschlagt ist
und über den in jeder Vorphase (pv) der Haltespeicher (C) zumindest angenähert auf das auf dem genannten Ausgangsleitungsabschnitt (zi) momentan herrschende Potential umgeladen wird, das dann in der nachfolgenden Durchschaltephase (ph) an dem genannten weiteren Komparatoreingang (-) aufrechterhalten bleibt.

2. Breitband-Koppeleinrichtung nach Anspruch 1, **dadurch gekennzeichnet,**
daß der Komparator (K) hysteresebehaftet ist.

3. Breitband-Koppeleinrichtung nach Anspruch 1 oder 2,
**dadurch gekennzeichnet,**
daß das Speicherglied durch ein an seinem Takteingang mit dem Koppelfeld-Durchschalte-Takt beaufschlagtes D-Kippglied (DK) gebildet ist.

## Claims

1. Switching device for broadband signals, comprising a switching-point matrix in FET technology, at the inputs (ej-sj) of which an input driver circuit (Ej) can be provided in each case and the outputs (zi-ai) of which are in each case provided with an output amplifier circuit (Ai), characterised in that the switching points (KPij) are formed by means of switching elements (Kij) which in each case, in the switched-through state, have a large on-state or internal resistance compared with the internal resistance effective at a matrix input (sj), and in that the output amplifier circuits (Ai) exhibit in each case a cascade circuit, inserted in the relevant output line (zi-ai), of a comparator (K) and of a storage element (DK), and a sample-and-hold circuit comprising a latch (C) and a switch (S), which connects the output line section (zi) leading from the associated switching elements (..Kij..) to one comparator input (+) to the other comparator input (-), to the control electrode of which switch a switching matrix switching-through clock subdividing a bit switching-through period into a preliminary phase (pv) and the actual switching-through phase (ph) is applied, and via which the latch (C) is at least approximately recharged, in each preliminary phase (pv), to the potential instantaneously prevailing on the said output line section (zi), which potential is then maintained at the said further comparator input (-) in the subsequent switching-through phase (ph).

2. Broadband switching device according to Claim 1, characterised in that the comparator (K) has hysteresis.

3. Broadband switching device according to Claim 1 or 2, characterised in that the storage element is formed by a D-type flip flop (DK) to which the switching matrix switching-through clock is applied at its clock input.

## Revendications

1. Dispositif de couplage pour signaux à large bande comportant une matrice de points de couplage réalisée selon la technique FET, aux entrées (ej-sj) de laquelle peut être prévu respectivement un circuit d'attaque d'entrée (Ej) et dont les sorties (zi-ai) comportent respectivement un circuit amplificateur de sortie (Ai), caractérisé par le fait que des points de couplage (Kpij) sont formés par des éléments de couplage (Kij) possédant, à l'état d'interconnexion, respectivement une résistance à l'état passant ou résistance interne élevée par rapport à la résistance interne active à une entrée (sj) de la matrice, et que les circuits amplificateurs de sortie (Ai) possèdent respectivement un circuit itératif monté dans la ligne de sortie considérée (zi-ai) et formé d'un comparateur (K) et d'un circuit de mémoire (DK), et un circuit d'échantillonnage et de blocage, qui relie la section (zi) de la ligne de sortie, qui raccorde les éléments de couplage associés (..Kij..) à une entrée (+) du comparateur, à l'autre entrée (-) du comparateur et est constitué par une mémoire de maintien (C) et un interrupteur (S), dont l'électrode de commande est chargée par un signal de cadence d'interconnexion du champ de couplage, qui subdivise un intervalle de temps de transmission des bits en une phase préalable (pv) et en la phase d'interconnexion proprement dite (ph), et par l'intermédiaire duquel, lors de chaque phase préalable (pv), la mémoire de maintien (C) est déchargée au moins approximativement au potentiel régnant instantanément dans ladite section (zi) de la ligne de sortie et qui reste appliquée à ladite autre entrée (-) du comparateur pendant la phase suivante d'interconnexion (ph).

2. Dispositif de couplage à large bande suivant la revendication 1, caractérisé par le fait que le comparateur (K) présente une hystérésis.

3. Dispositif de couplage à large bande suivant la revendication 1 ou 2, caractérisé par le fait que le circuit de mémoire est formé par un circuit à bascule de type D (DK) dont l'entrée de cadence est chargée par le signal de cadence d'interconnexion du champ de couplage.

# FIG 1

EP 0 249 836 B1

**FIG 2**

**FIG 3**